# FASCICULE DE BREVET EUROPEEN

(11) **EP 3 729 036 B1**
(45) Date de publication et mention de la délivrance du brevet: **10.07.2024**
(21) Numéro de dépôt: 18839840.8
(22) Date de dépôt: 20.12.2018
(51) Int. Cl.: G01L 13/02, G01L 19/04, G01L 19/06

(54) **CAPTEUR DE PRESSION DIFFERENTIEL**
DIFFERENZDRUCKSENSOR
DIFFERENTIAL PRESSURE SENSOR

(30) Priorité: 21.12.2017 FR 1762717
(43) Date de publication de la demande: 28.10.2020
(73) Titulaire: ArianeGroup SAS, 78130 Les Mureaux (FR)
(72) Inventeur: GOUBERT, François, 33160 Saint Aubin De Medoc (FR)
(74) Mandataire: Cabinet Beau de Loménie
(86) Numéro de dépôt international: PCT/FR2018/053474
(87) Numéro de publication internationale: WO 2019/122759

(56) Documents cités:
- EP-A2- 0 327 524
- EP-A2- 2 251 664
- DE-A1- 10 131 688
- US-A- 4 034 610
- US-A- 4 212 209

## Description

### Arrière-plan de l'invention

La présente invention se rapporte au domaine général des capteurs pour mesurer la pression d'un fluide par mesure de la différence de pression entre une pression de référence et une pression à mesurer.

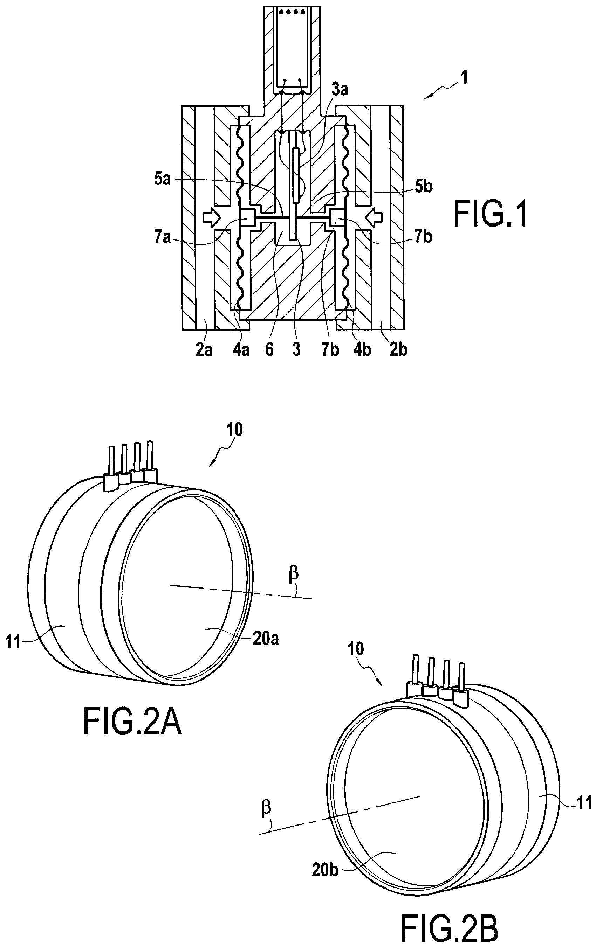

On a illustré sur la figure 1 un capteur de pression 1 de l'état de la technique. Le capteur de pression de la figure 1 est par exemple décrit sur internet à l'adresse : « http://www.spc.ac-aix-marseille.fr/phy_chi/Physique_appliquee/Menu/TP/capteur_de_pression/C apteurs_de_pression.html ». Comme visible sur la figure 1, le capteur de pression 1 comprend deux lignes d'entrée 2a, 2b de fluide. Une des deux lignes d'entrée 2a, 2b correspond à la ligne de référence par laquelle un fluide avec une pression de référence qui est connue est introduit dans le capteur de pression 1, et l'autre ligne correspond à la ligne de mesure par laquelle un fluide avec une pression à mesurer est introduit dans ledit capteur de pression 1.

Le capteur de pression 1 est un capteur bidirectionnel, rendant possible le cas où la ligne d'entrée 2a est la ligne de référence tandis que la ligne d'entrée 2b est la ligne de mesure, ainsi que le cas où la ligne d'entrée 2a est la ligne de mesure tandis que la ligne d'entrée 2b est la ligne de référence.

Afin de mesurer la différence de pression entre les deux lignes d'entrées 2a, 2b, le capteur de pression 1 comprend une tige de mesure 3 sur laquelle la pression des deux lignes d'entrées 2a, 2b est exercée. La tige de mesure 3 est fixée par une extrémité, l'autre extrémité étant libre de se déplacer. Une jauge extensométrique 3a est disposée sur la tige de mesure 3 de manière à mesurer la déformation de ladite tige de mesure 3 et ainsi obtenir la différence de pression entre les deux lignes d'entrées 2a, 2b à partir de la déformation de la tige de mesure 3.

Le capteur de pression 1 comprend des membranes 4a, 4b qui sont situées en regard de chaque ligne d'entrée 2a, 2b. Les membranes 4a, 4b sont destinées à être soumises chacune à la pression du fluide d'une des lignes d'entrées 2a, 2b et transmettre cette pression à la tige de mesure 3 via chacune une tige de transmission 5a, 5b. La cavité 6 définie par l'espace entre les membranes 4a, 4b est remplie d'huile afin de limiter la variation de volume de ladite cavité 6.

Le capteur de pression de l'état de la technique rencontre toutefois un problème de sensibilité à la température, la mesure du capteur de pression évoluant de manière non linéaire en fonction de la température. Cette sensibilité à la température provient de la dilatation thermique de l'huile à l'intérieur de la cavité 6. Une telle sensibilité à la température non linéaire tend à réduire la plage de températures sur laquelle le capteur de pression peut effectuer des mesures avec précisions, car plus la plage de températures d'utilisation du capteur de pression est grande, plus il devient difficile de compenser la sensibilité du capteur de pression à la température.

De plus, le capteur de pression de l'état de la technique possède une sensibilité linéaire à la pression de référence, et ainsi, pour une même différence de pression entre la pression de référence et la pression à mesurer, la mesure du capteur de pression 1 varie de manière linéaire en fonction de la pression de référence. Cette sensibilité à la pression de référence provient de la compressibilité de l'huile à l'intérieur de la cavité 6. Ainsi, afin d'augmenter la précision du capteur de pression, il est nécessaire de compenser la mesure en fonction de la valeur de la pression de référence, ce qui complexifie le capteur de pression.

Enfin, le capteur de pression de l'état de la technique rencontre également un problème de résistance à la surpression trop limitée. En effet, afin de limiter le déplacement des tiges de transmission 5a, 5b et la flexion de la tige de mesure 3, lesdites tiges de transmission 5a, 5b possèdent des butées 7a, 7b. Toutefois, la membrane 4a, 4b située du côté opposé à la ligne sur laquelle se produit la surpression tend à se déformer en gonflant vers l'extérieur de la cavité 6 sous l'effet du déplacement d'huile au sein de ladite cavité 6, ce qui peut provoquer un endommagement de ladite membrane 4a, 4b.

Les documents EP 0 327 524 A et US 4 212 209 A décrivent des exemples de capteur de pression différentielle.

### Objet et résumé de l'invention

La présente invention a donc pour but principal de pallier de tels inconvénients en proposant un capteur de pression comprenant une cavité contenant un liquide, ladite cavité étant fermée à une première extrémité par une première membrane et à une deuxième extrémité par une deuxième membrane, et un corps de mesure qui comprend une jauge extensométrique situé à l'intérieur de ladite cavité, caractérisé en ce que le corps de mesure est relié mécaniquement uniquement à une membrane parmi la première membrane et la deuxième membrane par un organe de connexion, le corps de mesure comprenant une forme possédant une symétrie centrale et l'organe de connexion étant fixé sur le centre de symétrie de la symétrie centrale dudit corps de mesure.

Le capteur de pression peut également comprendre les caractéristiques suivantes, prises seules ou en combinaison suivant les possibilités techniques :
- la cavité comprend une première chambre située du côté de la première membrane, et une deuxième chambre située du côté de la deuxième membrane, ledit capteur comprenant un dispositif de sécurité de surpression configuré pour empêcher la circulation de liquide entre la première chambre et la deuxième chambre lorsqu'une différence de pression entre une première pression exercée sur la première membrane et une deuxième pression exercée sur la deuxième membrane dépasse une valeur seuil ;
- le dispositif de sécurité de surpression comprend d'une part un premier clapet de surpression configuré pour empêcher la circulation de liquide entre la première chambre et la deuxième chambre lorsque la différence première pression moins deuxième pression atteint une première valeur limite, et d'autre part un deuxième clapet de surpression configuré pour empêcher la circulation de liquide entre la première chambre et la deuxième chambre lorsque la différence deuxième pression moins première pression atteint une deuxième valeur limite ;
- l'organe de connexion comprend une première extrémité en contact avec la première membrane, la première extrémité dudit organe de connexion comprenant un diamètre supérieur au reste dudit organe de connexion ;
- la cavité est séparée en une première chambre située du côté de la première membrane et en une deuxième chambre située du côté de la deuxième membrane, la première et la deuxième chambre étant séparées par le corps de mesure, le corps de mesure comprenant des perçages pour la circulation du liquide entre la première chambre et la deuxième chambre ;
- le corps de mesure est un disque dont le contour est fixé à une paroi interne de la cavité du capteur de pression, l'organe de connexion étant fixé au centre dudit disque ;
- le corps de mesure est une plaque de section carrée dont le contour est fixé à une paroi interne de la cavité du capteur de pression, l'organe de connexion étant fixé au centre de ladite plaque ;
- le corps de mesure est une tige dont les deux extrémités sont fixées à une paroi interne de la cavité du capteur de pression, l'organe de connexion étant fixé au centre de ladite tige ;
- le liquide est de l'huile.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 illustre un capteur de pression différentiel de l'état de la technique ;
- les figures 2a et 2b illustrent un capteur de pression différentiel selon un mode de réalisation de l'invention ;
- la figure 3 illustre une vue en coupe d'un capteur de pression différentiel selon un mode de réalisation de l'invention.

### Description détaillée de l'invention

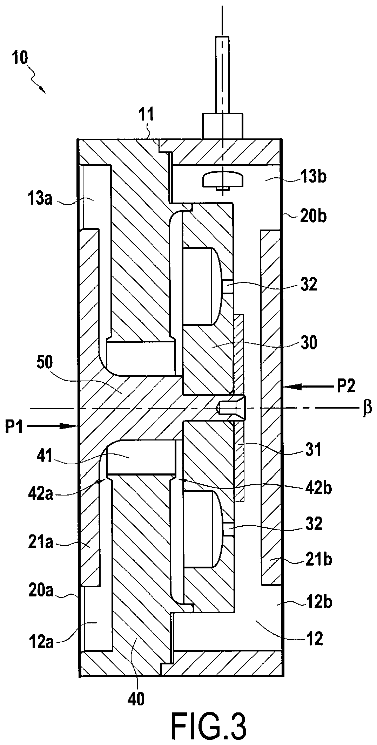

Comme cela est illustré sur les figures 2a, 2b et 3, un capteur de pression 10 selon l'invention comprend une paroi 11 cylindrique dirigée selon un axe β qui délimite une cavité 12, ladite cavité 12 étant remplie par un liquide. De préférence, le liquide remplissant la cavité 12 du capteur de pression 10 est de l'huile, l'huile étant faiblement compressible.

La cavité 12 comprend une première extrémité 12a qui est fermée par une première membrane 20a, et une deuxième extrémité 12b qui est fermée par une deuxième membrane 20b. La première membrane 20a et la deuxième membrane 20b sont destinées à être installées l'une sur une ligne de référence et l'autre sur une ligne de mesure. La ligne de référence est une ligne comprenant un fluide dont la pression est connue, de manière à pouvoir calculer la pression du fluide de la ligne de mesure grâce à la mesure du capteur de pression 10 de la différence de pression entre la ligne de référence et la ligne de mesure.

Le capteur de pression 10 comprend un corps de mesure 30 situé dans la cavité 12, entre la première membrane 12a et la deuxième membrane 12b. Le corps de mesure 30 comprend une jauge extensométrique 31 installée sur ledit corps de mesure 30, et qui est configurée pour mesurer la déformation dudit corps de mesure 30.

Le corps de mesure 30 comprend une forme possédant une symétrie centrale. Le corps de mesure comprend donc un centre de symétrie. Le centre de symétrie du corps de mesure est situé sur l'axe β.

Afin de fixer le corps de mesure 30 à l'intérieur de la cavité 12, la paroi interne de la cavité 13 comprend un support de fixation 40 qui d'une part est fixé à la paroi 11 du capteur de pression 10, et d'autre part sur lequel est fixé le corps de mesure 30. La forme du support de fixation 40 et la fixation avec le corps de mesure 30 sont adaptées pour que ledit corps de mesure 30 puisse se déformer par flexion, ainsi les points de fixation entre le support de fixation 40 et le corps de mesure 30 sont espacés dudit support de fixation 40.

Dans l'exemple de réalisation illustré sur les figures 2a, 2b et 3, le corps de mesure 30 est un disque centré sur l'axe β, le centre de symétrie dudit corps de mesure 30 étant donc situé au centre du disque, sur l'axe β. Le support de fixation 40 est également un disque qui comprend une nervure circulaire qui s'engage dans une rainure circulaire complémentaire réalisée sur le contour du corps de mesure 30, assurant ainsi la fixation dudit corps de mesure 30 sur le support de fixation 40.

Le capteur de pression 10 comprend un organe de connexion 50, par exemple un pion, qui relie mécaniquement le centre de symétrie du corps de mesure 30 à une membrane parmi la première membrane 20a et la deuxième membrane 20b. Dans l'exemple illustrés sur les figures 2a, 2b et 3, l'organe de connexion 50 relie le corps de mesure 30 à la première membrane 20a. L'organe de connexion 50 comprend donc une première extrémité en contact avec la première membrane 20a et une deuxième extrémité en contact avec le centre de symétrie du corps de mesure 30. La deuxième extrémité de l'organe de connexion 50 est fixée au corps de mesure 30 afin que le corps de mesure 30 suivent bien tous les mouvements de l'organe de connexion 50.

L'autre membrane, ici la deuxième membrane 20b, n'est pas reliée mécaniquement au corps de mesure 30, contrairement au capteur de l'état de la technique. Par « liaison mécanique » on entend ici que les efforts appliqués sur la membrane sont transmis au corps de mesure 30 via une pièce, telle que par exemple une tige, la pièce transmettant également les efforts du corps de mesure vers la membrane.

Le capteur de pression 10 mesure une différence de pression entre une première pression P1 appliquée sur la première membrane 20a et une deuxième pression P2 appliquée la deuxième membrane 20b grâce au fait que la deuxième pression P2 appliquée la deuxième membrane 20b est transférée sur la première membrane 20a via le liquide remplissant le capteur de pression 10, de sorte que la force appliquée sur le corps de mesure 30 par la première membrane 20a via l'organe de connexion 50 correspond à la différence entre la première pression P1 et la deuxième pression P2. La mesure de la déformation du corps de mesure 30 par la jauge extensométrique 31 permet de mesurer la force appliquée sur ledit corps de mesure 30 par la première membrane 20a, et ainsi d'obtenir la différence de pression entre la ligne de référence et la ligne de mesure.

Le fait que le corps de mesure 30 possède une forme avec une symétrie centrale et soit relié mécaniquement uniquement à la première membrane 20a au niveau de son centre de symétrie permet de résoudre le problème de sensibilité du capteur de pression 10 à la température. En effet, la dilation thermique du liquide remplissant le capteur de pression 10 est maintenant compensée par un gonflement de la deuxième membrane 20b, un tel gonflement étant rendu possible par le fait que ladite deuxième membrane 20b n'est pas reliée mécaniquement au corps de mesure 30. En outre, cela permet également de résoudre le problème de sensibilité du capteur de pression 10 à la pression de référence. De plus, le fait que le corps de mesure 30 possède une forme avec une symétrie centrale et soit relié mécaniquement uniquement à la première membrane 20a au niveau de son centre de symétrie permet d'améliorer le caractère bidirectionnel du capteur de pression 10. Par bidirectionnel on comprend ici la faculté du capteur de pression 10 à donner une même mesure pour une pression à mesurer est appliquée sur la première membrane 20a ou sur la deuxième membrane 20b.

Comme visible sur la 3, la cavité 12 du capteur de pression 10 est divisée en deux chambres par le corps de mesure 30 et le support de fixation 40, une première chambre 13a située du côté de la première membrane 20a, et une deuxième chambre 13b située du côté de la deuxième membrane 20b. Le support de fixation 40 comprend un perçage 41 pour laisser passer l'organe de connexion 50, et pour laisser circuler le fluide entre la première chambre 13a et la deuxième chambre 13b. Le corps de mesure 30 comprend également des perçages 32 afin de laisser circuler le fluide entre la première chambre 13a et la deuxième chambre 13b. Ainsi, tout mouvement de la première membrane 20a ou de la deuxième membrane 2b entraine un déplacement de liquide entre la première chambre 13a et la deuxième chambre 13b.

Le capteur de pression 10 comprend un dispositif de sécurité de surpression qui est mobile entre une position ouverte dans laquelle le liquide peut librement se déplacer entre la première chambre 13a et la deuxième chambre 13b, et une position fermée dans laquelle ledit dispositif de sécurité de surpression empêche la circulation de fluide entre la première chambre 13a et la deuxième chambre 13b. Le dispositif de sécurité de surpression est configuré pour être en position ouverte en utilisation normale, et pour passer en position fermée en cas de surpression dans une des lignes. Ainsi, lorsque la pression exercée sur une membrane devient trop importante par rapport à la pression exercée sur l'autre membrane et que la différence entre les deux pressions atteint une valeur seuil, le dispositif de sécurité de surpression passe en position fermée. Un tel dispositif de sécurité de surpression permet d'empêcher que le liquide situé dans la chambre correspondant à la membrane subissant la surpression soit chassé dans l'autre chambre et déforme l'autre membrane en la faisant gonfler vers l'extérieur, risquant ainsi de provoquer un endommagement.

Dans l'exemple de réalisation illustré sur la figure 3, le dispositif de sécurité de surpression est formé par un premier clapet de surpression 42a et un deuxième clapet de surpression 42b. Le premier clapet de surpression 42a est formé sur une première face du support de fixation 40 dirigée vers la première membrane 20a, et le deuxième clapet de surpression 42b est formé sur une deuxième face du support de fixation dirigée vers la deuxième membrane 20b et le corps de mesure 30. Le premier clapet 42a et le deuxième clapet 42b sont tous les deux mobiles entre une position ouverte dans laquelle ils autorisent la circulation de liquide entre la première chambre 13a et la deuxième chambre 13b, et une position fermée dans laquelle ils empêchent la circulation de liquide entre les deux chambres.

Le premier clapet de surpression 42a passe dans sa position fermée lorsque la première pression P1 devient trop importante suite à une surpression et qu'ainsi la différence de pression ΔP première pression P1 moins deuxième pression P2 (ΔP = P1-P2) atteint une première valeur limite. Le premier clapet de surpression 42a passe dans sa position fermée par écrasement de la première membrane 20a sous l'effet de l'augmentation de la première pression P1, un disque 21a disposé sous la membrane (ici formé par une extrémité de l'organe de connexion 50) venant obturer le premier clapet de surpression 42a. La première valeur limite est déterminée par l'écartement entre la première face du support de fixation 40 et le disque 21a disposé sous la première membrane 20a.

Le deuxième clapet de surpression 42b passe dans sa position fermée lorsque la deuxième pression P2 devient trop importante suite à une surpression et qu'ainsi la différence de pression ΔP deuxième pression P2 moins première pression P1 (ΔP = P2-P1) atteint une deuxième valeur limite. Le deuxième clapet de surpression 42b passe dans sa position fermée par écrasement du corps de mesure 30 contre la deuxième face du support de fixation 40. La déformation du corps de mesure 30 est provoquée par l'augmentation de la pression du liquide dans la deuxième chambre 13b. La deuxième valeur limite est déterminée par l'écartement entre le corps de mesure 30 et la deuxième face du support de fixation 40.

Dans l'exemple de réalisation illustré sur les figures, des disques 21a et 21b sont installés contre les première et deuxièmes membranes 20a et 20b. Ces disques 21a, 21b permettent de renforcer les membranes. Le disque 21a disposé sous la première membrane 20a peut être formé par un agrandissement du diamètre de l'organe de connexion 50 sur sa première extrémité. Selon une variante possible, le capteur de pression 10 peut être dépourvu de disque 21b contre la deuxième membrane 20b.

Selon une variante possible, le corps de mesure 30 est une plaque de section carrée (section perpendiculaire à l'axe β), qui est fixée sur tout son contour au support de fixation 40 et qui est fixée à l'organe de connexion 50 à son centre. Selon une autre variante possible, le corps de mesure 30 est une tige qui est fixée à ses deux extrémités au support de fixation 40, et qui est fixée à l'organe de connexion 50 à son centre.

## Revendications

1. Capteur de pression (10) comprenant une paroi (11) dirigée selon un axe β délimitant une cavité (12) contenant un liquide, ladite cavité (12) étant fermée à une première extrémité par une première membrane (20a) et à une deuxième extrémité par une deuxième membrane (20b), et un corps de mesure (30) qui comprend une jauge extensométrique (31) situé à l'intérieur de ladite cavité, le corps de mesure (30) étant relié mécaniquement uniquement à une membrane parmi la première membrane (20a) et la deuxième membrane (20b) par un organe de connexion (50), **caractérisé en ce que** le corps de mesure (30) comprenant une forme possédant un centre de symétrie situé sur l'axe β et l'organe de connexion (50) étant fixé sur le centre de symétrie dudit corps de mesure (30), la cavité (12) étant séparée en une première chambre (13a) située du côté de la première membrane (20a) et en une deuxième chambre (13b) située du côté de la deuxième membrane (20b), la première chambre (13a) et la deuxième chambre (13b) étant séparées par le corps de mesure (30), le corps de mesure (30) comprenant des perçages (32) pour la circulation du liquide entre la première chambre (13a) et la deuxième chambre (13b).

2. Capteur de pression (10) selon la revendication 1, dans lequel la cavité (12) comprend une première chambre (13a) située du côté de la première membrane (20a), et une deuxième chambre (13b) située du côté de la deuxième membrane (20b), ledit capteur de pression (10) comprenant un dispositif de sécurité de surpression configuré pour empêcher la circulation de liquide entre la première chambre (13a) et la deuxième chambre (13b) lorsqu'une différence de pression entre une première pression exercée sur la première membrane (20a) et une deuxième pression exercée sur la deuxième membrane (20b) dépasse une valeur seuil.

3. Capteur de pression (10) selon la revendication 2, dans lequel le dispositif de sécurité de surpression comprend d'une part un premier clapet de surpression (42a) configuré pour empêcher la circulation de liquide entre la première chambre (13a) et la deuxième chambre (13b) lorsque la différence première pression (P1) moins deuxième pression (P2) atteint une première valeur limite, et d'autre part un deuxième clapet de surpression (42b) configuré pour empêcher la circulation de liquide entre la première chambre (13a) et la deuxième chambre (13b) lorsque la différence deuxième pression (P2) moins première pression (P1) atteint une deuxième valeur limite.

4. Capteur de pression (10) selon l'une quelconque des revendications 1 à 3, dans lequel l'organe de connexion (50) comprend une première extrémité en contact avec la première membrane (20a), la première extrémité dudit organe de connexion (50) comprenant un diamètre supérieur au reste dudit organe de connexion (50).

5. Capteur de pression (10) selon l'une quelconque des revendications 1 à 4, dans lequel le corps de mesure (30) est un disque dont le contour est fixé à une paroi interne de la cavité (12) du capteur de pression (10), l'organe de connexion (50) étant fixé au centre dudit disque.

6. Capteur de pression (10) selon l'une quelconque des revendications 1 à 4, dans lequel le corps de mesure (30) est une plaque de section carrée dont le contour est fixé à une paroi interne de la cavité (12) du capteur de pression (10), l'organe de connexion (50) étant fixé au centre de ladite plaque.

7. Capteur de pression (10) selon l'une quelconque des revendications 1 à 4, dans lequel le corps de mesure (30) est une tige dont les deux extrémités sont fixées à une paroi interne de la cavité (12) du capteur de pression (10), l'organe de connexion étant fixé au centre de ladite tige.

8. Capteur de pression (10) selon l'une quelconque des revendications 1 à 7, dans lequel le liquide est de l'huile.

## Patentansprüche

1. Drucksensor (10), umfassend eine Wand (11), die gemäß einer Achse β ausgerichtet ist, die einen Hohlraum (12) begrenzt, der eine Flüssigkeit enthält, wobei der Hohlraum (12) an einem ersten Ende durch eine erste Membran (20a) und an einem zweiten Ende durch eine zweite Membran (20b) geschlossen ist, und einen Messkörper (30), der einen Dehnungsmessstreifen (31) umfasst, der sich im Inneren des Hohlraums befindet, wobei der Messkörper (30) mit nur einer Membran von der ersten Membran (20a) und der zweiten Membran (20b) durch ein Verbindungselement (50) mechanisch verbunden ist, **dadurch gekennzeichnet, dass** der Messkörper (30) eine Form umfasst, die ein Symmetriezentrum aufweist, das sich auf der Achse β befindet, und das Verbindungselement (50) an dem Symmetriezentrum des Messkörpers (30) befestigt ist, wobei der Hohlraum (12) in eine erste Kammer (13a), die sich auf der Seite der ersten Membran (20a) befindet, und in eine zweite Kammer (13b), die sich auf der Seite der zweiten Membran (20b) befindet, unterteilt ist, wobei die erste Kammer (13a) und die zweite Kammer (13b) durch den Messkörper (30) unterteilt sind, wobei der Messkörper (30) Bohrungen (32) zur Zirkulation der Flüssigkeit zwischen der ersten Kammer (13a) und der zweiten Kammer (13b) umfasst.

2. Drucksensor (10) nach Anspruch 1, wobei der Hohlraum (12) eine erste Kammer (13a), die sich auf der Seite der ersten Membran (20a) befindet, und eine zweite Kammer (13b), die sich auf der Seite der zweiten Membran (20b) befindet, umfasst, wobei der Drucksensor (10) eine Überdrucksicherungsvorrichtung umfasst, die dazu ausgestaltet ist, die Zirkulation von Flüssigkeit zwischen der ersten Kammer (13a) und der zweiten Kammer (13b) zu verhindern, wenn eine Druckdifferenz zwischen einem auf die erste Membran (20a) ausgeübten ersten Druck und einem auf die zweite Membran (20b) ausgeübten zweiten Druck einen Schwellenwert überschreitet.

3. Drucksensor (10) nach Anspruch 2, wobei die Überdrucksicherungsvorrichtung einerseits ein erstes Überdruckventil (42a), das dazu ausgestaltet ist, die Zirkulation von Flüssigkeit zwischen der ersten Kammer (13a) und der zweiten Kammer (13b) zu verhindern, wenn die Differenz erster Druck (P1) minus zweiter Druck (P2) einen ersten Grenzwert erreicht, und andererseits ein zweites Überdruckventil (42b), das dazu ausgestaltet ist, die Zirkulation von Flüssigkeit zwischen der ersten Kammer (13a) und der zweiten Kammer (13b) zu verhindern, wenn die Differenz zweiter Druck (P2) minus erster Druck (P1) einen zweiten Grenzwert erreicht, umfasst.

4. Drucksensor (10) nach einem der Ansprüche 1 bis 3, wobei das Verbindungselement (50) ein erstes Ende in Kontakt mit der ersten Membran (20a) umfasst, wobei das erste Ende des Verbindungselements (50) einen größeren Durchmesser als der Rest des Verbindungselements (50) umfasst.

5. Drucksensor (10) nach einem der Ansprüche 1 bis 4, wobei der Messkörper (30) eine Scheibe ist, deren Kontur an einer Innenwand des Hohlraums (12) des Drucksensors (10) befestigt ist, wobei das Verbindungselement (50) an der Mitte der Scheibe befestigt ist.

6. Drucksensor (10) nach einem der Ansprüche 1 bis 4, wobei der Messkörper (30) eine Platte mit einem quadratischen Querschnitt ist, deren Kontur an einer Innenwand des Hohlraums (12) des Drucksensors (10) befestigt ist, wobei das Verbindungselement (50) an der Mitte der Platte befestigt ist.

7. Drucksensor (10) nach einem der Ansprüche 1 bis 4, wobei der Messkörper (30) eine Stange ist, deren zwei Enden an einer Innenwand des Hohlraums (12) des Drucksensors (10) befestigt sind, wobei das Verbindungselement an der Mitte der Stange befestigt ist.

8. Drucksensor (10) nach einem der Ansprüche 1 bis 7, wobei es sich bei der Flüssigkeit um Öl handelt.

## Claims

1. A pressure sensor (10) comprising a wall (11) directed along an axis β delimiting a cavity (12) containing a liquid, said cavity (12) being closed at a first end by a first diaphragm (20a) and at a second end by a second diaphragm (20b), and a measuring body (30) which comprises a strain gauge (31) positioned inside said cavity (12), the measuring body (30) being mechanically connected only to one diaphragm among the first diaphragm (20a) and the second diaphragm (20b) by a connection member (50), **characterized in that** the measuring body (30) comprises a center of symmetry positioned on the axis β and the connection member (50) being fastened to the center of symmetry of the central symmetry of said measuring body (30), the cavity (12) being separated into a first chamber (13a) positioned on the side of the first diaphragm (20a) and a second chamber (13b) positioned on the side of the second diaphragm (20b), the first chamber (13a) and the second chamber (13b) being separated by the measuring body (30), the measuring body (30) comprising bores (32) for the circulation of liquid between the first chamber (13a) and the second chamber (13b)..

2. The pressure sensor (10) according to claim 1, wherein the cavity (12) comprises a first chamber (13a) positioned on the side of the first diaphragm (20a), and a second chamber (13b) positioned on the side of the second diaphragm (20b), said pressure sensor (10) comprising an overpressure safety device configured to prevent the circulation of liquid between the first chamber (13a) and the second chamber (13b) when a pressure difference between a first pressure exerted on the first diaphragm (20a) and a second pressure exerted on the second diaphragm (20b) exceeds a threshold value.

3. The pressure sensor (10) according to claim 2, wherein the overpressure safety device comprises, on the one hand, a first overpressure valve (42a) configured to prevent the circulation of liquid between the first chamber (13a) and the second chamber (13b) when the difference, first pressure (P1) minus second pressure (P2) reaches a first limiting value, and on the other hand a second overpressure valve (42b) configured to prevent the circulation of liquid between the first chamber (13a) and the second chamber (13b) when the difference, second pressure (P2) minus first pressure (P1) reaches a second limiting value.

4. The pressure sensor (10) according to any one of claims 1 to 3, wherein the connection member (50) comprises a first end in contact with the first diaphragm (20a), the first end of said connection member (50) comprising a diameter greater than the rest of said connection member (50).

5. The pressure sensor (10) according to any one of claims 1 to 4, wherein the measuring body (30) is a disk, the contour of which is fastened to an inner wall of the cavity (12) of the pressure sensor (10), the connection member (50) being fastened to the center of said disk.

6. The pressure sensor (10) according to any one of claims 1 to 4, wherein the measuring body (30) is a plate with a square cross section, the contour of which is fastened to an inner wall of the cavity (12) of the pressure sensor (10), the connection member (50) being fastened to said plate.

7. The pressure sensor (10) according to any one of claims 1 to 4, wherein the measuring body (30) is a bar, the two ends of which are fastened to an inner wall of the cavity (12) of the pressure sensor (10), the connection member being fastened to the center of said bar.

8. The pressure sensor (10) according to any one of claims 1 to 7, wherein the liquid is oil.
